# EUROPEAN PATENT APPLICATION

(11) **EP 4 224 510 A1**
(43) Date of publication of application: **09.08.2023**
(21) Application number: 21887985.6
(22) Date of filing: 15.01.2021
(51) Int. Cl.: H01H 85/06, H01H 85/08, H01M 50/581

(54) **SELF-FUSING UNIT AND PROTECTIVE ELEMENT APPLYING SAME**

(30) Priority: 03.11.2020 CN 202011211861
(71) Applicant: Shanghai Wayon Electronics Co., Ltd., Shanghai 200083 (CN)
(72) Inventor: XIA, Xinjun, Shanghai 201202 (CN); HAN, Qiaolei, Shanghai 201202 (CN); QIAN, Chaoyong, Shanghai 201202 (CN); LI, Feng, Shanghai 201202 (CN); WANG, Kaicheng, Shanghai 201202 (CN); CHENG, Yifei, Shanghai 201202 (CN); SHEN, Shilin, Shanghai 201202 (CN)
(74) Representative: Lermer, Christoph
(86) International application number: PCT/CN2021/072155
(87) International publication number: WO 2022/095279

(57) **Abstract**

**Abstract:** A self-fusing unit (100) for protection devices. The self-fusing unit has a conductive sheath/core structure with resistivity of 1.5-40 µΩ·cm, and the sheath/core structure is composed of an inner core (101) and an outer sheath (102). The outer sheath is in contact with the surface of the inner core and fully covers it, and both the melting point and the electrical conductivity of the outer sheath are higher than those of the periphery of the inner core.

## Description

### BACKGROUND OF THE INVENTION

### 1. Field of the Invention

The present invention relates generally to circuit protection, and in particular relates to a self-fusing unit and its application in protection devices.

### 2. Description of the Related Art

Lithium-ion rechargeable batteries have been widely used in portable mobile devices such as mobile phones, laptops, tablet computers, digital cameras, etc., and are increasingly being applied to energy storage devices, electric bicycles, drones, sweepers and many other new applicants. While they show many superior performances, they are still holding back by the disadvantages as they may cause fire or explosion under improper operations, especially when applied to electric vehicles since the number or the volume of lithium-ion batteries used is huge. Once a fire or explosion occurs, the batteries could be life-threatening.

Protective circuits are widely used in producing lithium-ion batteries to protect the users and electronic equipment based on their functions of cutting off the output of the battery pack in a given situation. The ways of protection include but not limited to PTC, Breaker, SMD Fuse, thermal fuse, IC plus MOSEFET, self-control protective components. Among them, fuse units composed of low melting point metals such as lead, tin, silver, copper, bismuth, indium, gold, aluminum, nickel, and zinc are commonly used. For example, the traditional one-time overcurrent fusing devices are mainly made by placing a metal fusing unit in a glass or ceramic tube; the consequently developed self-control protection devices also contain all kinds of different fusing units.

As for the self-control protection devices being developed in recent years, when overcurrent occurs, a large amount of current flowing through will heat up the fusing unit until it fuses, thereby achieving overcurrent protection. In addition, when overvoltage occurs, the current flows through the heating element in the self-control protection device to generate enough heat to cause the fusion of the fusing unit, putting the battery circuit in an open state to achieve overvoltage protection. In general, the self-control protection devices have various protective functions including overcurrent protection, overvoltage protection and over-temperature protection, and in the meantime, they show other features such as small sizes and suitable for reflow soldering, etc.

On the current market, some of the fusing units used in the protection devices are applied in the field of low current protection, featuring large internal resistance and low melting point, and wave soldering is often used; others are applied in the field of high current protection, featuring small internal resistance, and high melting point, and reflow soldering is mostly used. Due to the widespread use of high-current, high-voltage, and high-string-count lithium-ion battery packs, the market makes higher demands on self-control protection devices. The key point is the urgent requirement for a kind of fusing unit with low internal resistance and low melting point, which can withstand the reflow soldering for mounting processes.

New energy vehicles have received more and more attention from countries around the world in recent years. In order to encourage the development of new energy vehicles, the governments of the United States, France, Germany, Japan and other countries have introduced preferential policies to stimulate the sales. In the meantime, many countries have successively introduced restrictive policies on the production of fuel cars due to the concern on their pollution as well. Electric vehicles like Tesla that use lithium-ion batteries as their only power source become very popular among customers. Based on the huge requirement for lithium-ion batteries in electric vehicles, power tools, drones, etc., it is necessary to develop special protection devices that can withstand high voltage and high current.

For example, the power supply of Tesla electric vehicles is formed by connecting multiple 18650 batteries in series to form a battery pack, then the battery packs are connected in parallel to form a battery group, and the battery groups are connected in series to form a battery board. Each 18650 battery is connected to a fusing unit for protection; each battery pack, each battery group as well as the assembled battery board are protected independently by fusing units. Such series-parallel connections, the battery pack, battery group, and battery board can output high voltage and high current, and correspondingly, self-control protection devices that can withstand high voltage and high current are required.

The current self-control protection devices mostly use lead or its alloy with a melting point of about 300°C to make fusing unit, since it can prevent the fusion of protection devices in the subsequent reflow soldering at high temperatures, and can strongly adhere to the surface of metal layers such as nickel, gold/nickel, platinum/silver, platinum, etc. However, with the miniaturization of electronic devices, in order to increase the rated current in a limited size, the high resistance of conventional lead and its alloy can hardly meet the demand.

### SUMMARY OF THE INVENTION

In view of the foregoing disadvantages inherent in the known types of fusing units now present in the prior art, a major object of the present invention is to provide a new self-fusing unit to meet the small-size requirement.

A second object is to provide a method to produce a self-fusing unit.

Another object is to provide a protection device with a self-fusing unit, which shows high electrical conductivity, reduced working resistance and contact resistance of the circuit, and in the meantime meet the requirement of high current. In addition, the melting point of the self-fusing unit is as low as possible but can safely withstand the reflow soldering.

To attain this, the present invention generally comprises a self-fusing unit with a conductive sheath/core structure of which the resistivity is in the range of 1.5-40 µΩ·cm. The sheath/core structure is composed of an inner core and an outer sheath, and the outer sheath is in contact with the surface of the inner core and fully covers it. Both the melting point and the electrical conductivity of the outer sheath are higher than those of the periphery of the inner core.

The present invention provides a self-fusing unit that can be used in self-fusing protection devices, or self-control protection devices. When the current exceeds the rated current, the self-fusing unit will be fused due to self-heating, disconnecting the circuit; or when a certain amount of heat is absorbed, the self-fusing unit will be thermally fused, disconnecting the circuit.

In the present invention, the outer sheath with higher electrical conductivity completely covers the periphery of the fusible inner core, and the melting point of the outer sheath material is higher than the melting point of the inner core material, so that the self-fusing unit can meet the requirements of the reflow soldering while maintaining the appearance of the unit, and no phenomenon of shrinkage, wrinkling, fusing, melting and outflow of the inner core material occurs.

In the self-fusing unit, the periphery of the fusible inner core is completely covered with the outer sheath with high electrical conductivity. The unit has the advantages of simple structure, convenient producing process, low cost, convenient use and operation, and can be used in various protection devices.

The thickness of the inner core is in the range of 0.02-0.2mm, and the thickness of the outer sheath is in the range of 0.006-0.03mm; the self-fusing unit maintains its original appearance during the reflow soldering, but can quickly self-fuse when the temperature of the self-fusing unit is higher than 280°C or the power of a heating element under the self-fusing unit is over 2W.

The self-fusing unit can quickly self-fuse when being heated or absorb a certain amount of heat to be over 280°C. In other words, it is required that the self-fusing unit can fuse quickly and can maintain its appearance during reflow soldering.

The inner core is made of metal or polymer with high melting point and high wettability.

The preferred inner core is made of metal material chosen from tin, lead, silver, bismuth, steel, and an alloy of two or more.

The preferred inner core is made of polymer chosen from polyethylene, polypropylene, polyurethane, polyamide, polyether, polyvinyl alcohol, polyvinyl chloride, polystyrene, ethylene-vinyl acetate copolymer, and a composite of two or more.

The preferred surface roughness of inner core is less than 0.001mm.

The outer sheath is made of metal material chosen from silver, copper, gold, aluminum, nickel, zinc, and an alloy of the two or more.

The outer sheath is coated on the periphery of the inner core by one or more processes chosen from chemical plating, electroplating, rack plating, barrel plating, evaporation, sputtering, ion plating and calendering.

The sheath/core structure of the self-fusing unit composed of an inner core and an outer sheath is achieved by one or more processes chosen from chemical plating, electroplating, rack plating, barrel plating, evaporation, sputtering, ion plating and calendering, in which,
chemical plating, also known as electroless plating or autocatalytic plating, is a plating method in which metal ions in the plating solution are reduced to metal and deposited on the surface of certain part with the help of a suitable reducing agent and without applying current. Common electroless plating solutions are silver plating solution, nickel plating solution, copper plating solution, cobalt plating solution, nickel plating phosphorous solution, nickel phosphorous boron plating solution, etc.

Evaporation refers to a method of heating materials in a vacuum environment, vaporizing and depositing them on a substrate to obtain thin-films. The vacuum evaporation process generally includes following steps: (1) clean the surface of the substrate: oil stains, rust, residual plating materials, etc. on the inner wall of the vacuum chamber and the surface of substrate frame, which directly affects the purity and binding strength of the film, can be easily evaporated in vacuum; (2) preparation before evaporation: the evaporation chamber is evacuated to a suitable degree of vacuum, and the substrate and the plating material are pretreated to remove moisture so as to enhance the binding strength of the film. Heating the substrate under high vacuum can also desorb the gas adsorbed on the surface of the substrate and discharge the gas from the vacuum chamber. In this way, vacuum degree of the evaporation chamber can be increased and the purity and the binding force of the film can be improved. When a certain degree of vacuum is reached, a low-power current is first applied to the evaporation source to preheat or pre-melt the plating material; in order to prevent evaporation on the substrate, the evaporation source and plating material are covered with baffles, and then a high-power current is applied to quickly heat the plating material to its evaporation temperature, and baffles are removed during the evaporation; (3) evaporation: in the evaporation stage, besides choosing appropriate temperatures for the substrate and plating material, the deposition pressure is also a very important parameter. The deposition pressure, that is, the vacuum degree of the evaporation chamber, determines the mean free path of the gas molecules in the evaporation space and the number of collisions between the vapor atoms and residual gas atoms at a certain evaporation distance; (4) pickup: after the film thickness reaches the requirement, cover the evaporation source with a baffle and stop heating, but do not introduce air immediately.

Sputtering refers to the phenomenon of bombarding the target with energetic particles (usually gas positive ions), so that the atoms on the surface of the target can escape.

Ion plating refers to the method of using gas discharge to partially ionize gas or plating material under vacuum, and deposit the evaporated material or its reactant on the substrate under the bombardment of the gas ions or the evaporated material ions.

The present invention provides a method to produce the self-fusing unit, including the following steps:
step 1: cut or punch the inner core material into substrate of 2.0*2.0*0.6mm, place the substrate in a 40°C 80 v% sulfuric acid aqueous solution for 30 seconds, wash with deionized water, and dry;
step 2: immerse the substrate in sensitizer, that is, 15 g/L SnCl₂ solution for 200 minutes, take the substrate out, wash with deionized water, and dry;
step 3: immerse the substrate in catalyst, that is, 0.1g/L PdCl₂ solution for 360 minutes, take the substrate out, wash with deionization water, and dry;
step 4: immerse the substrate in the silver-plating solution, and control the silver-plating temperature at 30°C, wherein the silver-plating solution is 0.025g/ml AgNO₃ which is adjusted to pH = 9 by 15 mL ammonia; the reducing solution is 0.045g/mL C₆H₁₂O₆ solution; detect the thickness of silver-plated layer until a silver outer sheath of 2-20µm is formed, completely covering the surface of the inner core.

The present invention provides an alternative method to produce the self-fusing unit, including the following steps:
step 1: cut or punch the inner core material into substrate of 2.0*2.0*0.6mm, place the substrate in a 40°C 80 v% sulfuric acid aqueous solution for 30 seconds, wash with deionized water, and dry;
step 2: immerse the substrate in sensitizer, that is, 15 g/L SnCl₂ solution for 200 minutes, take the substrate out, wash with deionized water, and dry;
step 3: immerse the substrate in catalyst, that is, 0.1g/L PdCl₂ solution for 360 minutes, take the substrate out, wash with deionization water, and dry;
step 4: immerse the substrate in the electroplating solution in the barrel plating equipment, control the temperature of the silver-plating solution at 30°C, set the constant current to 15A; detect the thickness of silver-plated layer in real time until a silver outer sheath of 2-20µm is formed, completely covering the surface of the inner core.

The present invention provides another alternative method to produce the self-fusing unit, including the following steps:
step 1: attach 10µm silver foils to the upper and lower surfaces of a 0.6mm inner core, and laminate them by calendering, cut or punch the composite material into 2.0*2.0 substrate, and then place in 40°C 80v% sulfuric acid aqueous solution for 30 seconds, washed with deionized water, and dry;
step 2: immerse the substrate in sensitizer, that is, 15 g/L SnCl₂ solution for 200 minutes, take the substrate out, wash with deionized water, and dry;
step 3: immerse the substrate in catalyst, that is, 0.1g/L PdCl₂ solution for 360 minutes, take the substrate out, wash with deionization water, and dry;
step 4: immerse the substrate in the electroplating solution in the barrel plating equipment, control the temperature of the silver-plating solution at 30°C, set the constant current to 15A; by sticking silver foils on the top and bottom and then barrel plating, the side of the inner core is covered with silver foil; detect the thickness of the silver-plated layer in real time until a silver outer sheath 2-20µm is formed, completely covering the surface of the inner core.

The present invention provides a protection device with the self-fusing unit, which automatically disconnects the circuit when the rated current is exceeded, the device composes:
a ceramic substrate with front conductive electrodes on the surface, including a first electrode and a second electrode;
a self-fusing unit soldered on the surface of the ceramic substrate, and the self-fusing unit connects both the first electrode and the second electrode;
a blocking line of insulating medium, located outside the welding end of the self-fusing unit and the first electrode and the second electrode, preventing the excessively used solder from contacting the self-fusing unit inside the protection device;

The present invention provides another protection device with the self-fusing unit, and the device composes:
a ceramic substrate with front conductive electrodes on the surface, including a first electrode and a second electrode;
a heating element, setting on or inside the ceramic substrate, and an electrode is drawn out from the heating element;
a self-fusing unit on the heating element, soldering to cross-connecting the first electrode, the drawn-out electrode of the heating element and the second electrode;
a blocking line of insulating medium, located outside the first electrode and the second electrode, preventing the excessively used solder from contacting the self-fusing unit inside the protection device.

When the heating power of the self-control protection device exceeds 2W, the self-fusing unit will fuse and disconnect the circuit automatically.

The self-control protection device shows high electrical conductivity, reduced working resistance and contact resistance of the circuit and in the meantime meets the requirement of high current. In addition, the melting point of the self-fusing unit is as low as possible but can safely withstand the reflow soldering. The protection device adopts a non-fusion approach to safely cut off the current when overheating, so as to protect the circuit.

The present invention has remarkable effect. The self-fusing unit has a conductive sheath/core structure, in which the outer sheath is made of high-conductivity, high-melting point material whereas the inner core is made of a low melting point material, and thus, the self-fusing unit can meet the requirements of large current in the device. In addition, during reflow soldering, the sheath material of high melting point can lock the inner core material inside, so as to ensure that the self-fusing unit is in good condition without fusing, shrinkage, melting, outflow of the inner core material, etc. after the reflow soldering.

Additionally, the present invention provides a self-fusing protection device with the self-fusing unit, which shows high conductivity and reduced working-resistance and contact resistance of the circuit at the same time. Compared with other protection devices of the same size, the rated current of the protection device in the present invention is greatly improved, and it can fuse rapidly due to the lower melting point.

Additionally, the present invention provides a self-control protection device with the self-fusing unit. As a heating unit works under a certain power, the self-fusing unit absorbs heat and rapidly melts and shrinks, corroding the outer sheath, and wetting and accumulating on the surface of the metal layers such as nickel, gold/nickel, platinum/silver, platinum, etc., leading to the rapid fusion of the unit.

### BRIEF DESCRIPTION OF THE DRAWINGS

**Fig. 1** is a schematic diagram of the cross-sectional structure of the self-fusing unit.
**Fig. 2** is a schematic diagram of the planar view of the self-fusing unit.
**Fig. 3** is a schematic diagram of the planar view of the self-fusing protection device without the cover part.
**Fig. 4** is a schematic diagram of the cross-sectional structure of the self-fusing protection device, including two applications shown in Fig. 4(a) and Fig. 4(b).
**Fig. 5** is a working principal diagram of the self-fusing protection device.
**Fig. 6** is a schematic diagram of the planar view of the self-control protection device without the cover part.
**Fig. 7** is a schematic diagram of the cross-sectional structure of the self-control protection device, including two applications shown in Fig. 7(a) and Fig. 7(b).
**Fig. 8** is a working principal diagram of the self-control protection device.

The symbols in the figures are listed as follows:
100 - self-fusing unit; 101 - inner core; 102 - outer sheath;
300 - self-fusing protection device;
301 - ceramic substrate;
302 - back conductive electrode;
303 - front conductive electrode; 303a - first electrode; 303b - second electrode;
304 - blocking line; 3041/3042 - left/right blocking line;
305 - solder;
306 - binder;
307 - cover;
308 - conductive plugging;
309 - semicircular through hole; 3091/3902 - left/right semicircular through hole;
600 - self-control protection device;
601 - introducing electrode; 601a - first introducing electrode; 601b - second introducing electrode
602 - insulating layer;
603 - heating element;
604 - drawn-out electrode;
605 - flux.

### DESCRIPTION OF THE PREFERRED EMBODIMENT

The self-fusing unit, the self-fusing protection device, and the self-control protection device in the present invention will be described and illustrated in detail below with reference to the figures.

The present invention is not limited to the following embodiments, and it is obvious that various modifications can be made without departing from the main idea of the present invention. In addition, the position, size, ratio, etc. of the parts in the figures may be different from the actual ones. For specific physical positions, the figures in the context are only schematic descriptions. Obviously, there are also other situations in which the positions, sizes, scales or relationships between the drawings are different from each other. Obviously, there are also differences in the relative position, size, scale or relationship between the figures.

The full coverage of the self-fusing unit can be achieved in various ways, and embodiments are as follows:

### EMBODIMENT 1

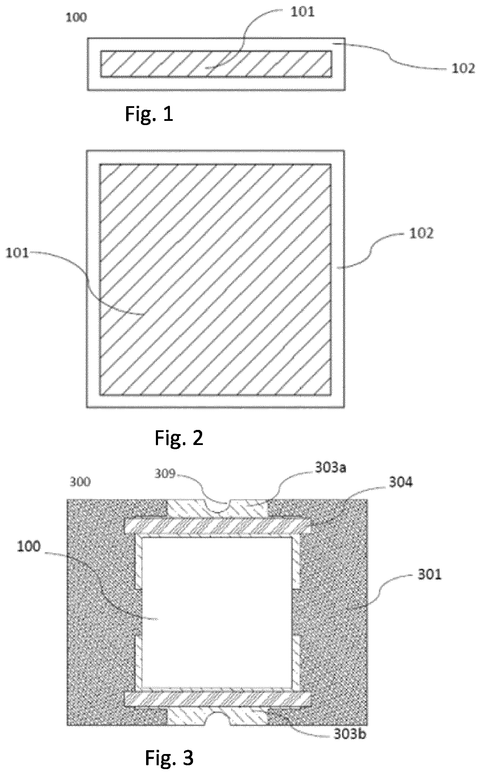

Fig. 1 is a schematic diagram of the cross-sectional structure of the self-fusing unit; Fig. 2 is a schematic diagram of the planar view of the self-fusing unit.

A self-fusing unit 100 for protection devices. The self-fusing unit 100 has a conductive sheath/core structure with resistivity of 1.5-40 µΩ·cm, and the sheath/core structure is composed of an inner core 101 and an outer sheath 102. The outer sheath 102 is in contact with the surface of the inner core 101 and fully covers it. In other words, the full surface of inner core 101 is in contact with the outer sheath 102. Both the melting point and the electrical conductivity of the outer sheath 102 are higher than those of the inner core 101. The inner core 101 is made of metal or polymer; the outer sheath 102 is made of silver-plated layer to restrain the outflow of the inner core material due to its swelling deformation or melting. The outer sheath 102 is prepared by the method of chemical silver plating, which comprises the following steps:
step 1: cut or punch the inner core 101 material into substrate of 2.0*2.0*0.6mm, place the substrate in a 40°C 80 v% sulfuric acid aqueous solution for 30 seconds, wash with deionized water, and dry;
step 2: immerse the substrate in sensitizer (15 g/L SnCl₂ solution) for 200 minutes, take the substrate out, wash with deionized water, and dry;
step 3: immerse the substrate in catalyst (0.1g/L PdCl₂ solution) for 360 minutes, take the substrate out, wash with deionization water, and dry;
step 4: immerse the substrate in the silver-plating solution, and control the silver-plating temperature at 30°C, wherein the silver-plating solution is 0.025g/ml AgNOs, which is adjusted to pH = 9 by 15 mL ammonia; the reducing solution is 0.045g/mL C₆H₁₂O₆ solution; use a coating thickness tester to detect the thickness of the silver-plated layer in real time, so that the surface of the inner core 101 is completely covered by the silver-plated outer sheath 102, and the optimal thickness of the silver-plated outer sheath 102 is 2-20 um.

### EMBODIMENT 2

A self-fusing unit 101, as shown in Fig. 1 and Fig. 2, has a conductive sheath/core structure which is composed of an inner core 101 and an outer sheath 102. The inner core 101 is made of metal or polymer; the outer sheath 102 is a silver-plated layer. The outer sheath 102 is prepared by the method of barrel silver plating, which comprises the following steps:
step 1: cut or punch the inner core 101 material into substrate of 2.0*2.0*0.6mm, place the substrate in a 40°C 80 v% sulfuric acid aqueous solution for 30 seconds, wash with deionized water, and dry;
step 2: immerse the substrate in sensitizer (15 g/L SnCl₂ solution) for 200 minutes, take the substrate out, wash with deionized water, and dry;
step 3: immerse the substrate in catalyst (0.1g/L PdCl₂ solution) for 360 minutes, take the substrate out, wash with deionization water, and dry;
step 4: immerse the substrate in the electroplating solution in the barrel plating equipment, control the temperature of the silver-plating solution at 30°C, set the constant current to 15A; detect the thickness of the silver-plated layer in real time until a silver outer sheath 102 of 2-20µm is formed, completely covering the surface of the inner core 101.

### EMBODIMENT 3

A self-fusing unit 101, as shown in Fig. 1 and Fig. 2, has a conductive sheath/core structure which is composed of an inner core 101 and an outer sheath 102. The inner core 101 is made of metal or polymer; the outer sheath 102 is prepared by the method combining calendering and barrel silver plating, which comprises the following steps:
step 1: attach 10µm silver foils to the upper and lower surfaces of a 0.6mm inner core 101, and laminate them by calendering, cut or punch the composite material into 2.0*2.0 substrate, and then place in 40°C 80v% sulfuric acid aqueous solution for 30 seconds, washed with deionized water, and dry;
step 2: immerse the substrate in sensitizer (15 g/L SnCl₂ solution) for 200 minutes, take the substrate out, wash with deionized water, and dry;
step 3: immerse the substrate in catalyst (0.1g/L PdCl₂ solution) for 360 minutes, take the substrate out, wash with deionization water, and dry;
step 4: immerse the substrate in the electroplating solution in the barrel plating equipment, control the temperature of the silver-plating solution at 30°C, set the constant current to 15A; by sticking silver foils on the top and bottom and then barrel plating, the side of the inner core 101 is completely covered with silver outer sheath 102; detect the thickness of the silver-plated layer in real time until a silver outer sheath 102 of 2-20µm is formed.

A self-fusing protection element is prepared using the self-fusing unit. When the current exceeds the rated current, the circuit will be disconnected due to spontaneous fusing. The advantage is that the protection device can not only withstand reflow soldering, but also has a low internal resistance of the self-fusing unit, which can be used as an overcurrent protection device for larger currents.

### APPLICATION 1

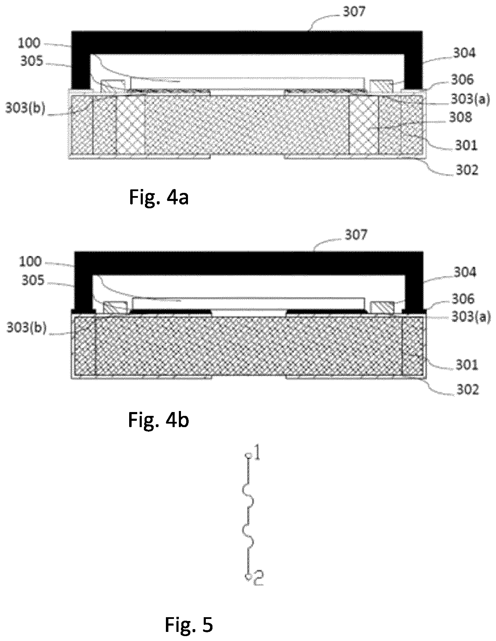

As shown in Fig. 3, a schematic diagram of the planar view of the self-fusing protection device without the cover part, and Fig. 4(a), a schematic diagram of the cross-sectional structure of the self-fusing protection device, a self-fusing protection device 300 has a self-fuse unit 100, a cover 307, a ceramic substrate 301, and conductive electrodes, which can automatically disconnect when the current exceeds the rated current. The device composes:
a ceramic substrate 301 with front conductive electrodes 303 on the surface, including a first electrode 303a and a second electrode 303b; and a back conductive electrode 302;
a self-fusing unit 100 welding on the surface of the ceramic substrate 301 with solder 305, and the self-fusing unit 100 connects both the first electrode 303a and the second electrode 303b;
a blocking line 304 of insulating medium, located outside the welding end of the self-fusing unit 100 and the first electrode 303a and the second electrode 303b, including a first blocking line 3041 and a second blocking line 3042, preventing the excessively used solder from contacting the self-fusing unit 100 inside the protection device which might cause the fusion of self-fusing protection device during reflow soldering. The protection device is prepared by following steps:
   step 1: as shown in Fig. 3, the ceramic substrate 301 is rectangular, with left and right semicircular through holes 3091/3092 and conductive plugging 308 on both sides as shown in Fig. 4(a); a back conductive electrode 302 mainly composed of silver is formed on the back of the ceramic substrate 301 by printing a corresponding pattern; the electrode is tightly connected to the ceramic substrate 301 after sintering;
   step 2: a front conductive electrode 303 mainly composed of silver is also formed by printing a corresponding pattern on the front of the ceramic substrate 301, wherein the front conductive electrode 303 includes a first electrode 303a and a second electrode 303b, and is closely connected with the ceramic substrate 301 by sintering so as to connect the back and front of the ceramic substrate 301 through the conductive electrodes;
   step 3: at the specific position of the conductive electrode 303 on the front of the ceramic substrate 301, that is, the inner side of the left and right semicircular through holes 3091/3092, a blocking line 304 mainly composed of insulating medium is printed, including the left and right blocking lines 3041/3042, and then integrated by sintering; the blocking line 304 mainly plays a limiting role when installing the self-fusing unit, meanwhile isolates the solder from contacting the self-fusing unit 100 when the product is mounted, forming an alloy with lower melting point, which overcomes the risk of the fusion of the self-fusing unit 100 after reflow soldering;
   step 4: print solder 305 on the front conductor electrode 303 and place the self-fusing unit 100, and then weld the self-fusing unit 100 on the front conductor electrode 303 through high temperature soldering;
   step 5: coat the adhesive 306 near the four corners of the ceramic substrate 301, and place an upper cover 307 of the injection mold above the adhesive 306, apply a certain pressure and place it at a certain temperature to cure the adhesive 306;
   step 6: the upper cover 307 is bonded to the periphery of the surface of the ceramic substrate 301 by the adhesive 306.

When the above steps are completed, the self-fusing protection device 300 is obtained. The working principal diagram of the self-fusing protection device 300 is similar to a conventional fuse, playing the role of overcurrent protection. As shown in Fig. 5, when the current flowing through terminals 1-2 is too large, the heat generated by the self-fusing protection device is difficult to maintain the thermal balance, and the heat is rapidly accumulated. Under the impact of large current, the self-fusing unit 100 is disconnected, which plays the role of protecting the circuit.

### APPLICATION 2

As shown in Fig. 3, a schematic diagram of the planar view of the self-fusing protection device without the cover part, and Fig. 4(b), a schematic diagram of the cross-sectional structure of the self-fusing protection device, a self-fusing protection device 300 has a structure similar to application 1, except that the ceramic substrate 301 has no conductive plugging. The self-fusing protection device 300 has a self-fuse unit 100, a cover 307, a ceramic substrate 301 and conductive electrode. When the current exceeds the rated current, the device will automatically disconnect.

The protection device is prepared by following steps:
step 1: as shown in Fig. 3, the ceramic substrate 301 is rectangular, with left and right semicircular through holes 3091/3092 on both sides; a back conductive electrode 302 mainly composed of silver is formed on the back of the ceramic substrate 301 by printing a corresponding pattern; the electrode is tightly connected to the ceramic substrate 301 after sintering;
step 2: a front conductive electrode 303 mainly composed of silver is also formed by printing a corresponding pattern on the front of the ceramic substrate 301, wherein the front conductive electrode 303 includes a first electrode 303a and a second electrode 303b, and is closely connected with the ceramic substrate 301 by sintering so as to connect the back and front of the ceramic substrate 301 through the conductive electrodes;
step 3: at the specific position of the conductive electrode 303 on the front of the ceramic substrate 301, that is, the inner side of the left and right semicircular through holes 3091/3092, a blocking line 304 mainly composed of insulating medium is printed, including the left and right blocking lines 3041/3042, and then integrated by sintering; the blocking line 304 mainly plays a limiting role when installing the self-fusing unit, meanwhile isolates the solder from contacting the self-fusing unit 100 when the product is mounted, forming an alloy with lower melting point, which overcomes the risk of the fusion of the self-fusing unit 100 after reflow soldering;
step 4: print solder 305 on the front conductor electrode 303 and place the self-fusing unit 100, and then weld the self-fusing unit 100 on the front conductor electrode 303 through high temperature soldering;
step 5: coat the adhesive 306 near the four corners of the ceramic substrate 301, and place the upper cover 307 of the injection mold above the adhesive 306, apply a certain pressure and place it at a certain temperature to cure the adhesive 306.

When the above steps are completed, the self-fusing protection device 300 is obtained.

This embodiment is just an example for easy understanding. Relevant researchers or engineering designers in the industry can make minor adjustments by changing one or several steps. As long as the working principal diagram is equivalent to what is shown in Fig. 5, it is regarded as within the scope of the claims of this invention.

The self-fusing unit can also be used to prepare a self-control protection device. When the self-fusing unit inside the device absorbs a certain amount of power and its melting point is reached, it fuses and disconnects the circuit. The advantage is that the protection device has a low internal resistance, which can withstand reflow soldering, and meanwhile at a certain voltage input, the internal heater of the device can stably output heat of a certain power. After absorbing a certain amount of heat, the self-fusing unit can quickly fuse, aggregate, and disconnect the circuit, which plays the role of protecting the circuit.

### APPLICATION 3

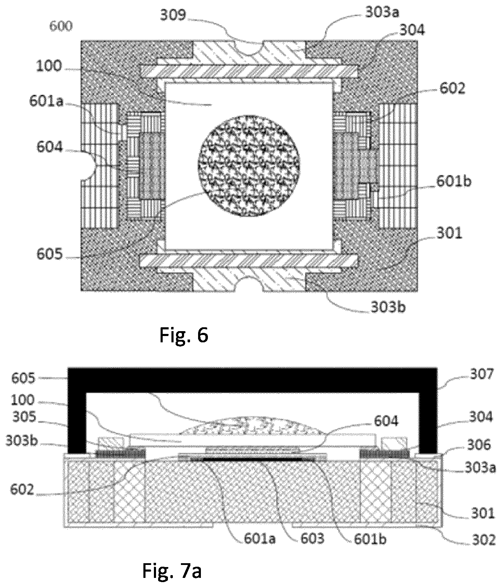

As shown in Fig. 6, a schematic diagram of the planar view of the self-control protection device without the cover part, and Fig. 7(a), a schematic diagram of the cross-sectional structure of the self-control protection device, a self-control protection device 600 with the self-fuse unit 100 is provided, composing:
a ceramic substrate 301 with front conductive electrodes 303 on the surface, including a first electrode 303a and a second electrode 303b;
a heating element 603 with a drawn-out electrode 604, setting on or inside the ceramic substrate 301;
a self-fusing unit 100 welding on the surface of the heating element 603 with solder 305, and the self-fusing unit 100 connects the first electrode 303a, the drawn-out electrode 604 of the heating element 603, and the second electrode 303b;
a blocking line 304 of insulating medium, located outside the first electrode 303a and the second electrode 303b, preventing the excessively used solder during the preparation of the self-control protection device 600 from contacting the self-fusing unit 100 inside the protection device, which might cause the fusion of self-control protection device during reflow soldering.

The protection device is prepared by following steps:
step 1: as shown in Fig. 6, the ceramic substrate 301 is rectangular, with left and right semicircular through holes 3091/3092 and conductive plugging 3081/3082 on both sides as shown in Fig. 7(a); a back conductive electrode 302 mainly composed of silver is formed on the back of the ceramic substrate 301 by printing a corresponding pattern; the electrode is tightly connected to the ceramic substrate 301 after sintering;
step 2: a front conductive electrode 303 mainly composed of silver is also formed by printing a corresponding pattern on the front of the ceramic substrate 301, wherein the front conductive electrode 303 includes a first electrode 303a and a second electrode 303b, and is closely connected with the ceramic substrate 301 by sintering so as to connect the back and front of the ceramic substrate 301 through the conductive electrodes; a paste with a certain resistance (the main component contains palladium or ruthenium) is printed between the first introducing electrode 601a and the second introducing electrode 601b of introducing electrode 601, and the heating element 603 is formed between the first introducing electrode 601a and the second introducing electrode 601b by sintering at high temperature;
step 3: an insulating layer 602 is formed covering the heating element 603 by printing the insulating paste on the heating element 603 and sintering at high temperature;
step 4: a drawn-out electrode 604 is formed covering the insulating layer 602 by printing the electrode paste on the insulating layer 602 and sintering at high temperature, and one end of the drawn-out electrode 604 is connected with the introducing electrode 601;
step 5: at the specific position of the conductive electrode 303 on the front of the ceramic substrate 301, that is, the outer side of the front conductive electrode 303 and the inner side of the left and right semicircular through holes 3091/3092, a blocking line 304 mainly composed of insulating medium is formed by printing, including the left and right blocking lines 3041/3042, and then integrated by sintering; the blocking line 304 mainly plays a limiting role when installing the self-fusing unit 100, meanwhile isolates the solder from contacting the self-fusing unit 100 when the product is mounted, forming an alloy with lower melting point, which overcomes the risk of the fusion of the self-fusing unit 100 after reflow soldering;
step 6: print solder 305 on the front conductor electrode 303 and drawn-out electrode 604, place the self-fusing unit 100, and then weld the self-fusing unit 100 on the front conductor electrode 303 and drawn-out electrode 604; coat flux 605 on the self-fusing unit 100;
step 7: coat the adhesive 306 near the four corners of the ceramic substrate 301, and place the upper cover 307 of the injection mold above the adhesive 306, apply a certain pressure and place it at a certain temperature to cure the adhesive 306.

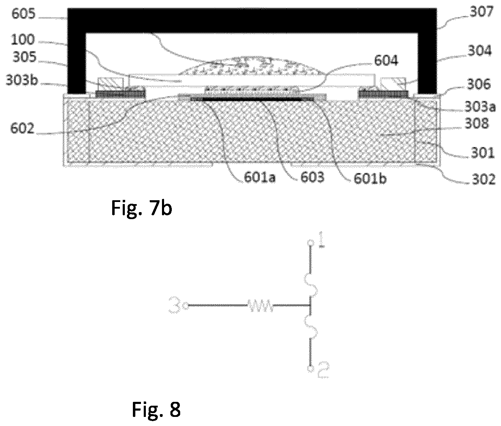

When the above steps are completed, the self-control protection device 600 is obtained with its working principal diagram shown in Fig. 8. The self-control protection device 600 not only has the overcurrent protection function of conventional fuse, but also the function of overvoltage protection. When a certain voltage is applied to the terminal s1-3 or terminals 2-3, the heating element 603 works, and the heat generated is absorbed by the self-fusing unit 100, resulting in the fusion of the self-fusing unit 100 to protect the circuit.

### APPLICATION 4

As shown in Fig. 6, a schematic diagram of the planar view of the self-control protection device without the cover part, and Fig. 7(b), a schematic diagram of the cross-sectional structure of the self-control protection device, a self-control protection device 600 has a structure similar to application 3, except that the ceramic substrate 301 has no conductive plugging. The protection device is prepared by following steps:
step 1: as shown in Fig. 6, the ceramic substrate 301 is rectangular, with left or right semicircular through holes 309, or as shown in Fig. 7(a), with conductive plugging(308); a back conductive electrode 302 mainly composed of silver is formed on the back of the ceramic substrate 301 by printing a corresponding pattern; the electrode is tightly connected to the ceramic substrate 301 after sintering;
step 2: a front conductive electrode 303 mainly composed of silver is also formed by printing a corresponding pattern on the front of the ceramic substrate 301, wherein the front conductive electrode 303 includes a first electrode 303a and a second electrode 303b, and is closely connected with the ceramic substrate 301 by sintering so as to connect the back and front of the ceramic substrate 301 through the conductive electrodes; a paste with a certain resistance (the main component contains palladium or ruthenium) is printed between the first introducing electrode 601a and the second introducing electrode 601b of introducing electrode 601, and the heating element 603 is formed between the first introducing electrode 601a and the second introducing electrode 601b by sintering at high temperature;
step 3: an insulating layer 602 is formed covering the heating element 603 by printing the insulating paste on the heating element 603 and sintering at high temperature;
step 4: a drawn-out electrode 604 is formed covering the insulating layer 602 by printing the electrode paste on the insulating layer 602 and sintering at high temperature, and one end of the drawn-out electrode 604 is connected with the introducing electrode 601;
step 5: at the specific position of the conductive electrode 303 on the front of the ceramic substrate 301, a blocking line 304 mainly composed of insulating medium is formed by printing, and then integrated by sintering; the blocking line 304 mainly plays a limiting role when installing the self-fusing unit 100, meanwhile isolates the solder from contacting the self-fusing unit 100 when the product is mounted, forming an alloy with lower melting point, which overcomes the risk of the fusion of the self-fusing unit 100 after reflow soldering;
step 6: print solder 305 on the front conductor electrode 303 and drawn-out electrode 604, place the self-fusing unit 100, and then weld the self-fusing unit 100 on the front conductor electrode 303 and drawn-out electrode 604; coat flux 605 on the self-fusing unit 100;
step 7: coat the adhesive 306 near the four corners of the ceramic substrate 301, and place the upper cover 307 of the injection mold above the adhesive 306, apply a certain pressure and place it at a certain temperature to cure the adhesive 306.

When the above steps are completed, the self-control protection device 600 is obtained.

This application is an example for easy understanding. Relevant researchers or engineering designers in the industry can make minor adjustments by changing one or several steps. As long as the working principal diagram is equivalent to the what is shown in Fig. 8, it is regarded as within the scope of the claims of this invention.

## Claims

1. A self-fusing unit for protection device, comprising:
a conductive sheath/core structure with the resistivity in the range of 1.5-40 µΩ·cm, wherein the sheath/core structure is composed of an inner core and an outer sheath, and the outer sheath is in contact with the surface of the inner core and fully covers it; both the melting point and the electrical conductivity of the outer sheath are higher than those of the periphery of the inner core, preventing the outflow of the inner core material due to its swelling and melting.

2. The self-fusing unit of claim 1, wherein the thickness of the inner core is in the range of 0.06-0.3mm, and the thickness of the outer sheath is in the range of 0.002-0.02mm; the self-fusing unit maintains its appearance during the reflow soldering, but can quickly self-fuses when the temperature is higher than 280°C or the power of a heating element under the self-fusing unit is over 2W.

3. The self-fusing unit of claim 1 or 2, wherein the outer sheath is coated on the inner core by one or more processes chosen from chemical plating, electroplating, rack plating, barrel plating, evaporation, sputtering, ion plating and calendering.

4. The self-fusing unit of claim 1 or 2, wherein the inner core is made of metal with high melting point and high wettability.

5. The self-fusing unit of claim 4, wherein the metal is chosen from tin, lead, silver, bismuth, steel, and an alloy of two or more.

6. The self-fusing unit of claim 1 or 2, wherein the inner core is made of polymer.

7. The self-fusing unit of claim 6, wherein the polymer is chosen from polyethylene, polypropylene, polyurethane, polyamide, polyether, polyvinyl alcohol, polyvinyl chloride, polystyrene, ethylene-vinyl acetate copolymer, and a composite of two or more.

8. The self-fusing unit of claim 3, wherein the outer sheath is chosen from silver, copper, gold, aluminum, nickel, zinc, and an alloy of the two or more.

9. The self-fusing unit of claim 1 or 2, wherein the surface roughness of inner core is less than 0.001mm.

10. A method to prepare the self-fusing unit of claim 1 to 9, including following steps:
step 1: cut or punch the inner core material into substrate of 2.0*2.0*0.6mm, place the substrate in a 40°C 80 v% sulfuric acid aqueous solution for 30 seconds, wash with deionized water, and dry;
step 2: immerse the substrate in sensitizer 15 g/L SnCl₂ solution for 200 minutes, wash with deionized water, and dry;
step 3: immerse the substrate in catalyst 0.1g/L PdCl₂ solution for 360 minutes, wash with deionization water, and dry;
step 4: immerse the substrate in the silver-plating solution, and control the silver-plating temperature at 30°C, wherein the silver-plating solution is 0.025g/ml AgNOs which is adjusted to pH = 9 by 15 mL ammonia; the reducing solution is 0.045g/mL C₆H₁₂O₆ solution; detect the thickness of the silver-plated layer until the silver outer sheath of 2-20µm completely covers the surface of the inner core.

11. A method to prepare the self-fusing unit of claim 1 to 9, including following steps:
step 1: cut or punch the inner core material into substrate of 2.0*2.0*0.6mm, place the substrate in a 40°C 80 v% sulfuric acid aqueous solution for 30 seconds, wash with deionized water, and dry;
step 2: immerse the substrate in sensitizer 15 g/L SnCl₂ solution for 200 minutes, wash with deionized water, and dry;
step 3: immerse the substrate in catalyst 0.1g/L PdCl₂ solution for 360 minutes, wash with deionization water, and dry;
step 4: immerse the substrate in the electroplating solution in the barrel plating equipment, control the temperature of the silver-plating solution at 30°C, set the constant current to 15A; detect the thickness of the silver-plated layer in real time until the silver outer sheath of 2-20µm completely covers the surface of the inner core.

12. A method to prepare the self-fusing unit of claim 1 to 9, including following steps:
step 1: attach 10µm silver foils to the upper and lower surfaces of a 0.6mm inner core, and laminate them by calendering, cut or punch the composite material into 2.0*2.0 substrate, and then place in 40°C 80v% sulfuric acid aqueous solution for 30 seconds, washed with deionized water, and dry;
step 2: immerse the substrate in sensitizer 15 g/L SnCl₂ solution for 200 minutes, wash with deionized water, and dry;
step 3: immerse the substrate in catalyst 0.1g/L PdCl₂ solution for 360 minutes, wash with deionization water, and dry;
step 4: immerse the substrate in the electroplating solution in the barrel plating equipment, control the temperature of the silver-plating solution at 30°C, set the constant current to 15A; by sticking silver foils on the top and bottom and then barrel plating, the side of the inner core is covered with silver foil; detect the thickness of the silver-plated layer in real time until the silver outer sheath of 2-20µm completely covers the surface of the inner core.

13. A self-fusing protection device with self-fusing unit of claim 1 to 9, which can disconnect automatically when the current exceeds rated current, comprising:
a ceramic substrate with front conductive electrodes on the surface, including a first electrode and a second electrode;
a self-fusing unit on the ceramic substrate, which is soldered to connect the first electrode and the second electrode;
a blocking line of insulating medium, located outside the connected first electrode and the second electrode of self-fusing unit, preventing the excessively used solder from contacting the self-fusing unit inside the protection device.

14. A self-control protection device with self-fusing unit of claim 1 to 9, comprising:
a ceramic substrate with front conductive electrodes on the surface, including a first electrode and a second electrode;
a heating element, setting on or inside the ceramic substrate, and an electrode is drawn out from the heating element;
a self-fusing unit on the heating element, which is soldered to cross-connecting the first electrode, the drawn-out electrode of the heating element and the second electrode;
a blocking line of insulating medium, located outside the first electrode and the second electrode, preventing the excessively used solder from contacting the self-fusing unit inside the protection device.

15. The self-control protection device of claim 14, wherein when the heating power of the heating element exceeds 2W, the self-fusing unit will fuse and disconnect the circuit autonomously.
